# EUROPEAN PATENT APPLICATION

(11) **EP 1 500 816 A1**
(43) Date of publication of application: **26.01.2005**
(21) Application number: 03077405.3
(22) Date of filing: 01.08.2003
(51) Int. Cl.: F03G 7/10

(54) **Gravity motor**

(30) Priority: 22.07.2003 GB 0317147
(71) Applicant: Dalton, Stephen, Edinburgh EH14 1BJ (GB)
(72) Inventor: Dalton, Stephen, Edinburgh EH14 1BJ (GB)

(57) **Abstract**

The machine requires no fossil fuels nor does it omit any poisonous gases or effluent.

The workings housed within the arms air compressor, piston, piston shaft and weight will be combined in a unique system to ultimately result in the rotation of the arms (windmill style) which will turn a drive shaft to generate power for any purpose.
The air receivers are primed with air.

## Description

This invention relates to a machine which will produce alternative power.

Alternative power means are one of the world's major priorities in the replacement of fossil fuels combined with life enhancing improvements to the atmosphere. The most current area of concentration of effort is by using wind or wave energy.

This invention will produce a power source by utilising balance and gravity combined with mathematical calculus to compute weights and distances i.e. an exact science through rotating arms, which along their length will house an air receiver, a piston rod and piston and the weight. The rotating arms will turn a drive shaft which in turn will produce the power source to operate compressors or generators of any given size.

All air receivers as shown will be primed with air. To activate the air will force weight outwards. When the arms start to revolve the arm moving from North to East and then to South will have weight extended simultaneously. The arm moving from South to West then to North will have weight retracted until it reached full North when the weight will be extended.

The rotation of the arms will initially be triggered by air then any additional power required will be produced by an internal compressor as shown, driven by the power returned by gravity air and motion turning the internal compressors.

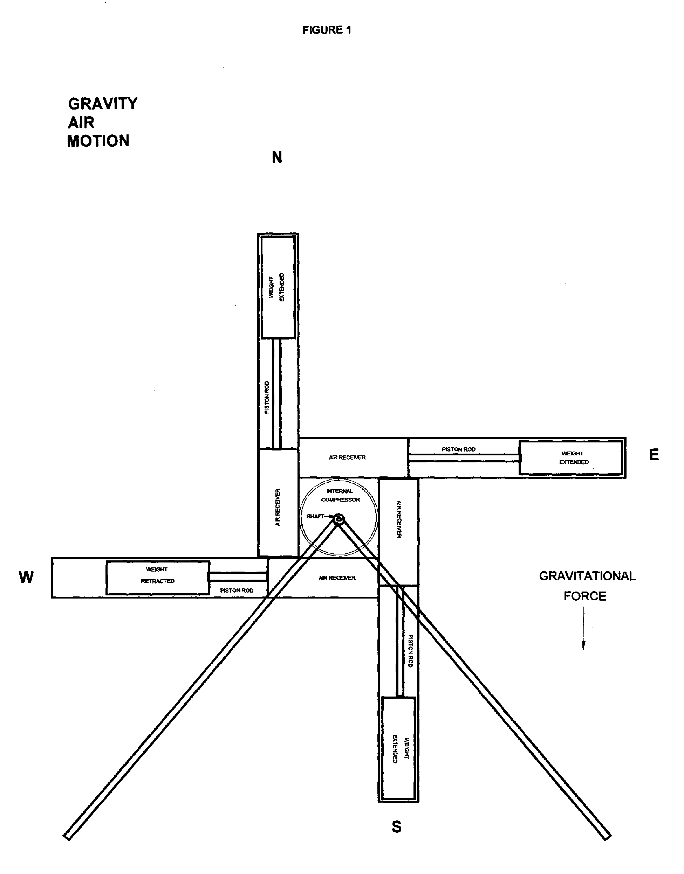

A specific embodiment of the invention will now be described by way of example with reference to the accompanying drawings in which:-
*Figure 1* shows the machine standing with the 4 way arms at North, South, East and West. In this position the weight in arms pointing due North and South will be extended as will the weight in the arm pointing due East only the weight in the arm pointing due West will be retracted.

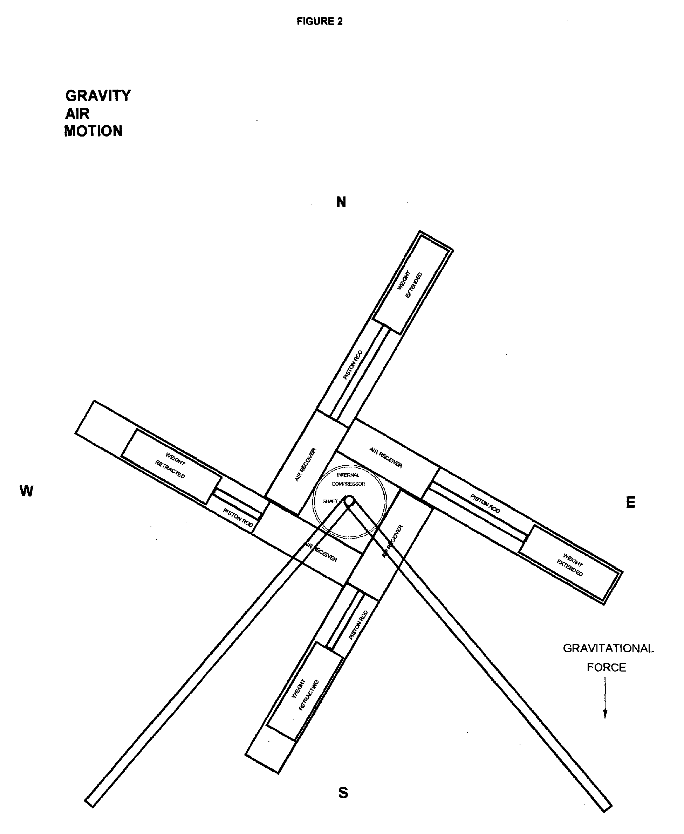

*Figure 2* illustrates the arm having moved clockwise from the positions shown in *figure 1*.

In this position the weight in the arm immediately previous at North remains extended, as does the weight in the arm previously at East. The arm previously at South but moving toward due West will have retracted it's weight and the arm moving from due West to due North will remain with the weight retracted until it reached the North when the weight will be extended having passed the line of true North.

## Claims

1. The gravity air motion (G.A.M.) machine comprising 4 arms containing compressed air, piston, piston rod and weight extend from a revolving shaft which houses a compressor. The shaft revolves or turns to create a force or power i.e. the creation of energy from the worldwide acclaimed terminology of alternative power.

2. The machine will be activated by the use of compressed air, the ongoing forward thrust of the "arms" comes from the balancing of weights and the laws of gravity.

3. The calculus or mathematics will be an exact science, and available in due course to give exacting weights and distances, etc, for the required amount of power in any given example.
